# EUROPEAN PATENT APPLICATION

(11) **EP 2 402 883 A1**
(43) Date of publication of application: **04.01.2012**
(21) Application number: 10167022.2
(22) Date of filing: 23.06.2010
(51) Int. Cl.: G06K 7/10

(54) **Reflector mounting structure in a barcode scanner**

(71) Applicant: Champtek Incorporated, Hsin-Tien City 231 Taipei (TW)
(72) Inventor: Hsieh, Meng-Yann, 231 Hsin Tien City 231 Taipei (TW)
(74) Representative: 2K Patentanwälte Blasberg Kewitz & Reichel

(57) **Abstract**

The reflector fixing structure is used for a barcode scanner (1) having a base (10) and an optical module (20) mounted thereon. The optical module (20) includes a photo sensor (24). The reflector fixing structure includes a mounting plate (30) and a reflector (22). The mounting plate (30) extends from a surface of the base (10) and has a receiving portion (31). The reflector (22), which functions as reflecting barcode signals to the photo sensor (24), is assembled to the receiving portion (31).

## Description

### BACKGROUND OF THE INVENTION

### 1. Technical Field

The invention generally relates to barcode scanners, particularly to optical modules of barcode scanners.

### 2. Related Art

A barcode is an optical machine-readable representation of data, which shows certain data on certain products. The most popular barcode system is linear or 1D (1 dimensional) barcodes, which represent data in the widths (lines) and the spacings of parallel lines. Barcodes can be read by optical scanners called barcode readers, or scanned from an image by special software.

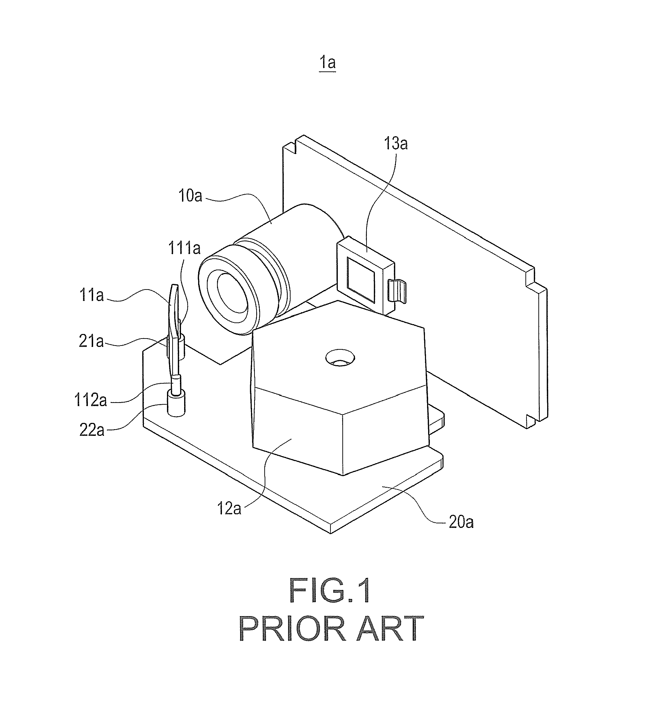

There is an optical module in a barcode scanner. Please refer to FIG. 1, which shows an optical module 1a of a small barcode scanner. It includes a light generator 10a, a reflector 11a, a multisided mirror 12a and a photo sensor 13a. The lights from the light generator 10a are reflected by the reflector 11a and multisided mirror 12a to project onto a barcode to be read. Then the barcode's image is reflected back to the multisided mirror 12a and reflector 11a, and finally received by the photo sensor 13a.

As can be seen in FIG. 1, the reflector 11a is mounted on a base 20a in an insertion way. Thus the reflector 11 a and the base 20a are provided with two pins 111a, 112a and two cylinders 21a, 22a, respectively. However, the pins 1111, 112a protruding from the reflector 11a is difficult to be manufactured. Also, the cylinders 21a, 22a of the base 20a are hard to be formed very accurately. It can not be confirmed that the pins 111a, 112a have been inserted into the cylinders 21 a, 22a at an expected position. And fine-tuning can not be made after the insertion has completed. Accordingly, the optical module 1a can not perform very well. To overcome this problem, the molds for forming the reflector 11a and base 20a require high accuracy to reduce the tolerance. But this will cause cost increase.

### SUMMARY OF THE INVENTION

A primary object of the invention is to reduce assembling deviation and to enhance performance of barcode scanners.

Another object of the invention is to relieve the accuracy of molds and to reduce the manufacture costs.

To accomplish the above objects, the invention provides a reflector fixing structure for a barcode scanner having a base and an optical module mounted thereon. The optical module includes a photo sensor. The reflector fixing structure includes a mounting plate and a reflector. The mounting plate extends from surface of the base and has a receiving portion. The reflector, which functions as reflecting barcode signals to the photo sensor, is assembled to the receiving portion.

In comparison with the conventional structure, the reflector fixing structure includes a mounting plate and a reflector. The mounting plate extends from surface of the base and has a receiving portion. The reflector is assembled to the receiving portion, such as gripping, sliding or adhering. Because the reflector can be definitely fixed in the receiving portion, the assembling deviation can be reduced and the requirement of accuracy of molds can be relieved.

### BRIEF DESCRIPTION OF THE DRAWINGS

FIG. 1 shows an optical module of a conventional barcode scanner;
FIG. 2 is a perspective view of the first embodiment of the reflector fixing structure of the invention;
FIG. 3A is an exploded perspective view of the first embodiment shown in FIG. 2;
FIG. 3B is an assembled perspective view of FIG. 3A;
FIG. 3C is a cross section view of FIG. 3B;
FIG. 4A is an exploded perspective view of the second embodiment of the invention;
FIG. 4B is an assembled perspective view of FIG. 4A;
FIG. 5A is an exploded perspective view of the third embodiment of the invention;
FIG. 5B is an assembled perspective view of FIG. 5A;
FIG. 6A is an exploded perspective view of the fourth embodiment of the invention; and
FIG. 6B is an assembled perspective view of FIG. 6A.

### DETAILED DESCRIPTION OF THE INVENTION

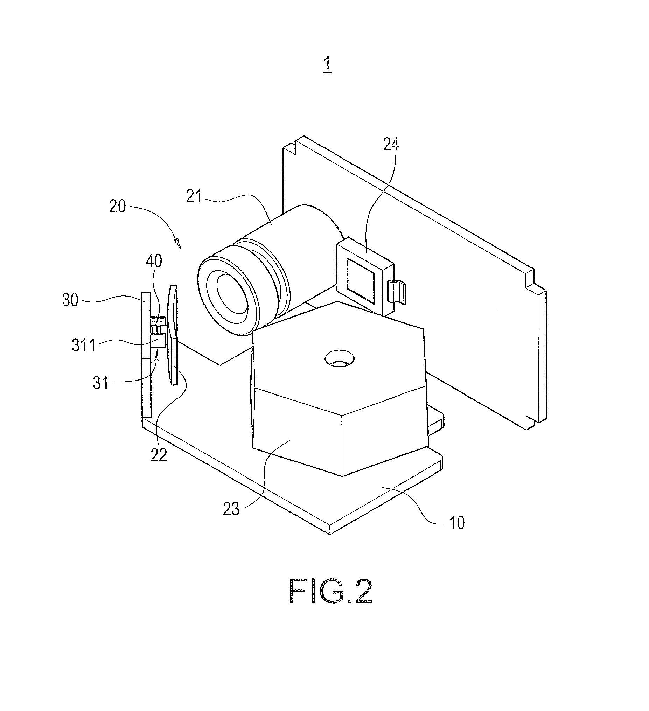

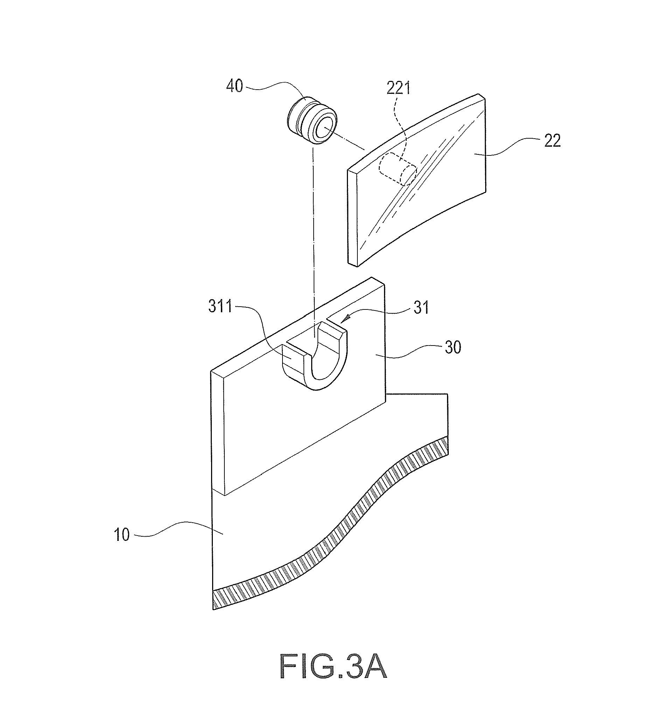

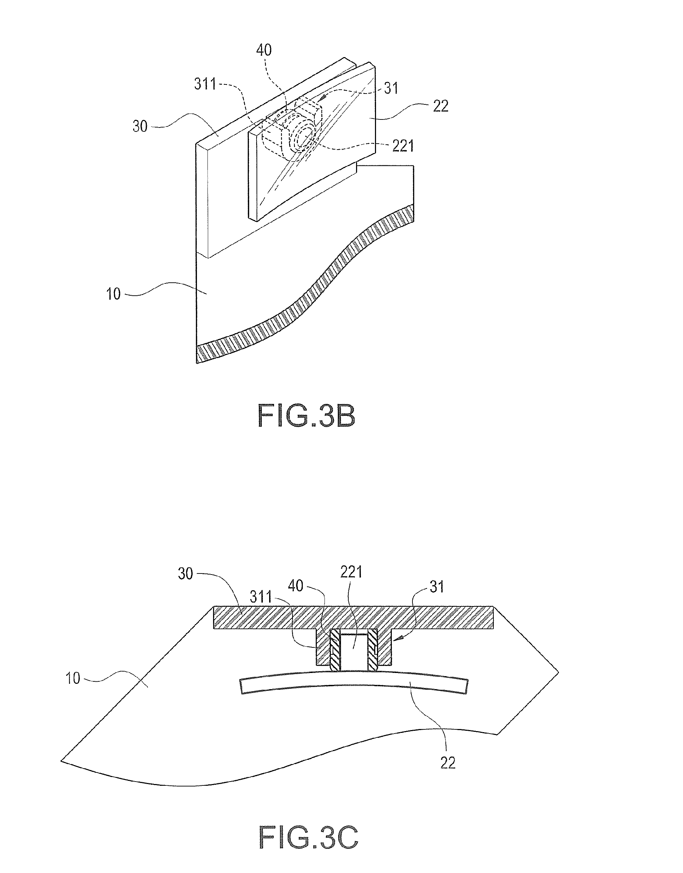

The first embodiment of the invention is shown in FIGs. 2 and 3A-C. The barcode scanner of the invention has a base 10 and an optical module 20 mounted thereon. The optical module 20 includes a light generator 21, a reflector 22, a multisided mirror 23 and a photo sensor 24. The lights from the light generator 21 are reflected by the reflector 22 and multisided mirror 23 to project onto a barcode to be read. Then the barcode's image is reflected back to the multisided mirror 23 and reflector 22, and finally received by the photo sensor 24.

The reflector fixing structure of the barcode scanner 1 includes a mounting plate 30. The mounting plate 30 extends from a surface of the base 10 and has a receiving portion 31. In this embodiment, the receiving portion 31 is a U-shaped body 311, and one side of the reflector 22 is provided with a rod 221 and a sleeve 40 put around the rod 221. The sleeve 40, which is preferably made of rubber, is embedded in the U-shaped body 311 for keeping the reflector 22 to be tightly fixed on the mounting plate 30.

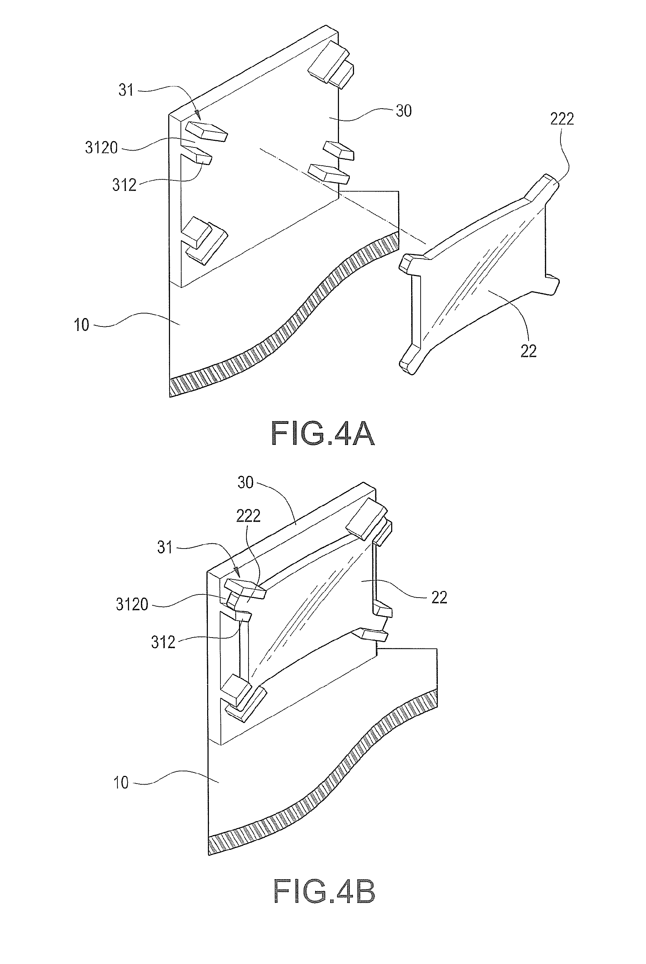

Please refer to FIGs. 4A and 4B, which show the second embodiment of the invention. This embodiment differs from the first embodiment by another connecting way between the reflector 22 and mounting plate 30. In this embodiment, the receiving portion 31 of the mounting plate 30 is a plurality of ribs 312 which are arranged in pairs. A gap 3120 is formed in each pair of ribs 312. Correspondingly, the reflector 22 is provided with a plurality of protrusions 222. Each of the protrusions 222 is embedded in one of the gaps 3120 and nipped by the pair of ribs 312. By this, the reflector 22 can be fixed on the mounting plate 30.

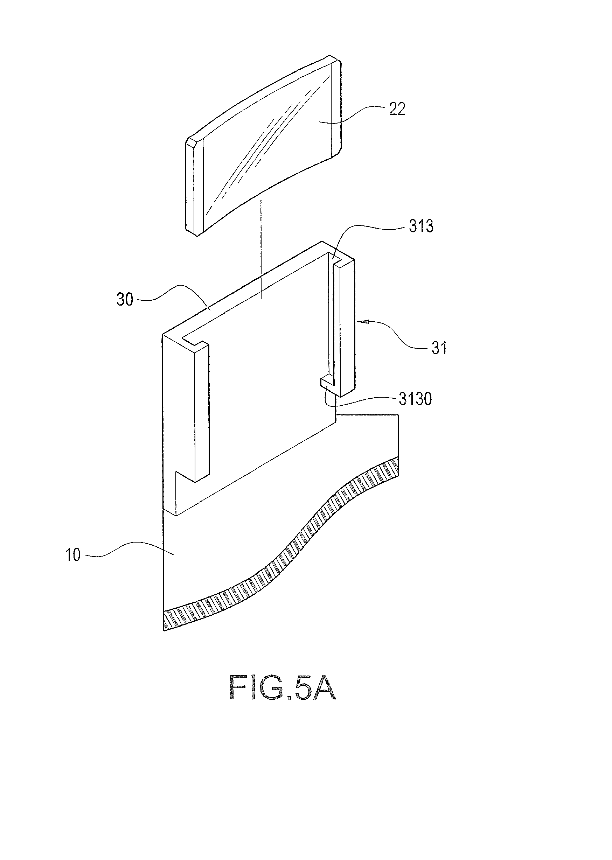

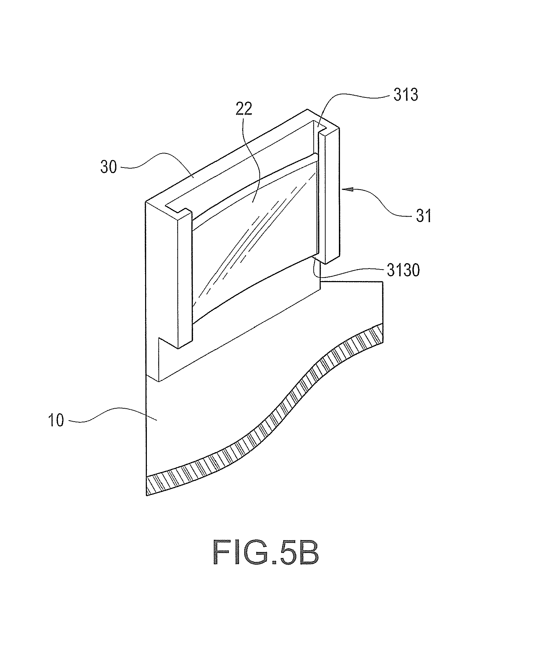

Please refer to FIGs. 5A and 5B, which show the third embodiment of the invention. This embodiment differs from the first embodiment by another connecting way between the reflector 22 and mounting plate 30. In this embodiment, the receiving portion 31 is a sliding way 313. One end of the sliding way 313 is provided with a blocker 3130 for blocking the reflector 22.

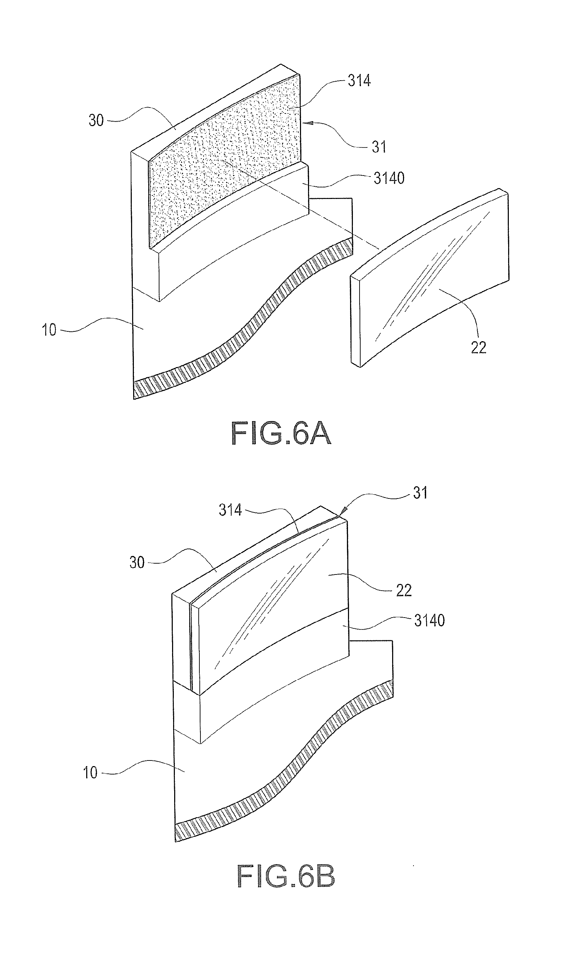

Please refer to FIGs. 6A and 6B,, which show the fourth embodiment of the invention. This embodiment differs from the first embodiment by another connecting way between the reflector 22 and mounting plate 30. In this embodiment, the receiving portion 31 of the mounting plate 30 is an adherent (adhesive) tape 314 which has two adherent (adhesive) sides. One side of the adherent tape 314 adheres onto the mounting plate 30, and the other side adheres onto the reflector 22. Additionally, a blocking wall 3140 is provided at the bottom of the adherent tape 314 for secondarily supporting the reflector 22.

## Claims

1. A reflector fixing structure of a barcode scanner, wherein the barcode scanner has a base (10) and an optical module (20) mounted thereon, and the optical module (20) includes a photo sensor (24), the reflector fixing structure comprising:
a mounting plate (30), extending from a surface of the base (10) and having a receiving portion (31); and
a reflector (22) for reflecting barcode signals to the photo sensor (24);
wherein the reflector is assembled to the receiving portion (31).

2. The reflector fixing structure of claim 1, wherein the receiving portion (31) is a U-shaped body (311), one side of the reflector (22) is provided with a rod (221) and a sleeve (40) put around the rod (221), and the sleeve (40) is embedded in the U-shaped body (311).

3. The reflector fixing structure of claim 1, wherein the receiving portion (31) is a plurality of ribs (312) which are arranged in pairs, a gap (3120) is formed in each pair of ribs (312), the reflector (22) is provided with a plurality of protrusions 222 corresponding to the pairs of ribs (312), and each of the protrusions (222) is embedded in one of the gaps (3120).

4. The reflector fixing structure of claim 1, wherein the receiving portion (31) is a sliding way (313) for slidably accommodating the reflector (22).

5. The reflector fixing structure of claim 4, wherein one end of the sliding way (313) is provided with a blocker (3130) for blocking the reflector (22).

6. The reflector fixing structure of claim 1, wherein the receiving portion (31) is an adherent tape (314), one side of the adherent tape (314) adheres onto the mounting plate (30), and the other side adheres onto the reflector (22).

7. The reflector fixing structure of claim 6, wherein a blocking wall (3140) is provided at a bottom of the adherent tape (314) for secondarily supporting the reflector (22).
